# EUROPEAN PATENT APPLICATION

(11) **EP 2 092 962 A1**
(43) Date of publication of application: **26.08.2009**
(21) Application number: 08151600.7
(22) Date of filing: 19.02.2008
(51) Int. Cl.: A62B 7/08, A62B 7/14, B64D 13/00

(54) **Oxygen breathing device for long term supply**

(71) Applicant: Intertechnique SA, 78373 Plaisir Cédex (FR)
(72) Inventor: Rittner, Wolfgang, 23623, Siblin (DE); Meckes, Rüdiger, 23919, Berkenthin (DE); Boomgaarden, Günter, 23684, Scharbeutz (DE); Niedostatek, Mark, 21279, Wenzendorf (DE)
(74) Representative: Eisenführ, Speiser & Partner

(57) **Abstract**

The invention relates to an oxygen breathing device, in particular for providing oxygen to passenger or crew member of an aircraft, the device comprising a first chemical oxygen source comprising at least one chemical agent, which is able to perform a chemical reaction to produce oxygen. According to the invention a second chemical oxygen source is additionally provided, said second chemical oxygen source comprising at least one chemical agent, which is able to perform a chemical reaction to produce oxygen, wherein the first and the second oxygen source may be started independently from each other.

## Description

The invention relates to an oxygen breathing device, in particular for providing oxygen to passenger or crew member of an aircraft, the device comprising a first chemical oxygen source comprising at least one chemical agent, which is able to perform a chemical reaction to produce oxygen. A further aspect of the invention is a method for supplying oxygen to a person using an oxygen breathing device.

Oxygen breathing devices of the aforementioned type are used for a number of purposes where temporary or permanent supply of oxygen to a human person is necessary. A particular field of application of such oxygen breathing devices is the field of aircraft, wherein a pressure drop within an aircraft flying at high altitude may make it necessary to supply supplemental oxygen to the passengers and the crew members to ensure sufficient oxygen supply to these persons. Usually, an oxygen breathing device is provided for each crew member and passenger or a group thereof and is usually arranged above the passenger. In case of an emergency, such oxygen breathing device is activated, for example automatically by a cabin pressure monitoring system or manually by a crew member, whereafter an oxygen mask connected via a hose to an oxygen source falls from above the passenger downwards and can be used by the passenger.

The flow of oxygen may be started automatically by activation of the system or by the crew member or may be activated by a particular action undertaken by the passenger, e.g. by pulling the mask towards himself to thus activate the device by a pulling force transferred via the hose guiding the oxygen flow or an additional lanyard coupled to the oxygen mask.

Oxygen breathing devices having a chemical oxygen source are particularly attractive for a number of applications since they provide high reliability and are maintenance-free. Such chemical oxygen sources comprise chemical oxygen cores which are adapted to create a complete oxygen descent profile for a person like a passenger or crew member. By this, the oxygen required by a person in certain, predetermined flight conditions or flight profiles can be provided in each flight condition to the person.

However, a particular problem of such oxygen breathing devices having a chemical oxygen generator lies in the fact that specific flight conditions may require other profiles of the amount of oxygen delivered over time. In particular, in a condition where an aircraft travels at low altitude, only a small flow of oxygen is required, whereas in high altitudes a large flow of oxygen is required.

It is known to provide chemical oxygen generators which are capable to provide large amounts of oxygen over a long period of time. Oxygen breathing devices comprising such large oxygen generators are able to supply oxygen to a person in each specific flight condition, whereby the oxygen flow may be reduced using a flow control valve at low altitude flight conditions. However, such oxygen breathing devices are heavy and bulky and thus provide considerable drawbacks in modern aircraft design.

It is a first object of the invention to provide an oxygen breathing device which is capable to supply oxygen to a passenger in different situations, in particular in situations where a high amount of oxygen is required and in a situation where a low amount of oxygen is required.

It is a still further object of the invention to provide an oxygen breathing device which is capable to supply oxygen to a person over a long period of time.

It is a still further object of the invention to provide an oxygen breathing device which is lightweight and requires a small amount of space.

These and other objects are fulfilled by providing an oxygen breathing device as described in the introductory portion, further comprising a second chemical oxygen source comprising at least one chemical agent, which is able to perform a chemical reaction to produce oxygen, wherein the first and the second oxygen source may be started independently from each other.

According to the invention, at least two chemical oxygen sources are provided in the oxygen breathing device. Both chemical oxygen sources are preferably coupled to the oxygen masks which are to be worn by the person via one common supply duct at least for a part of the supply line from the generators to the oxygen masks. By this, it is possible to decrease the weight and volume of the oxygen breathing device since the two oxygen generators can be adapted to the actual needs in a better way than in oxygen breathing devices having only one chemical oxygen generator. The two chemical oxygen sources may be started in a plurality of different modes. In a first mode, the two oxygen generators could be started simultaneously to provide a high amount of oxygen per time unit. Alternatively, the chemical oxygen generators can be started one after the other to provide oxygen over a long period of time at a lower rate per time unit.

According to a first preferred embodiment, the first chemical oxygen source is adapted to provide a higher rate of oxygen per time unit than the second chemical oxygen source. In this preferred embodiment, the oxygen devices are adapted to provide different rates of oxygen per time unit. Thus, a specific one of the two oxygen devices can be started depending on the rate of oxygen per time unit required by the passenger or crew member. For example, in such an oxygen breathing device, the first chemical oxygen generator can be initially started to provide a high rate of oxygen per time unit to a passenger or crew member when flying at high altitude. Following this initial start of the first chemical oxygen generator and after descent of the aircraft to a low altitude, the second chemical oxygen generator can be started to provide oxygen at a low rate per time unit to the passenger or crew member. It is to be understood, that in such preferred embodiment the first chemical oxygen generator may be adapted to provide the high rate of oxygen flow per time unit over only a short period of time, thus allowing to decrease weight and volume of such high-rate oxygen generator. Thus, according to this embodiment both criteria, a high rate of oxygen delivery per time unit and a long time delivery of oxygen can be fulfilled without significantly increasing weight and required space of the whole oxygen breathing unit.

According to a further preferred embodiment, the second chemical oxygen source is adapted to provide oxygen over a longer period of time than the first chemical oxygen source. In this preferred embodiment, the chemical oxygen generators may be started depending on the time for which a passenger or crew member must be supplied with oxygen. Generally, the first oxygen generator may be started before the second oxygen generator to thus first exhaust the first oxygen generator and hereafter, if required, exhaust the second oxygen generator. This preferred embodiment is particularly useful in combination with the aforementioned preferred embodiment since the reduction of running time of the first oxygen generator allows reduction of weight and volume of this first oxygen generator even if a high rate of oxygen per time unit is provided by this first oxygen generator. Thus, the combination of these two preferred embodiments will provide an oxygen breathing device meeting high demands with regard to duration and flow rate of oxygen without significantly increasing weight and space required by the device.

According to a still further preferred embodiment, the oxygen breathing device further comprises a control unit adapted to activate the first or the second chemical oxygen source depending on the amount of oxygen required by the passenger or crew member of the aircraft. By providing such control unit, which may be an electrical or mechanical control unit, the two chemical oxygen generators may be selectively started depending on external conditions like ambient or cabin pressure or cabin oxygen content or the like.

According to a further preferred embodiment, the first and the second oxygen source are coupled such that said chemical reaction of the second oxygen source is started after said chemical reaction of the first oxygen source is started. It is to be understood that the coupling of the first and second chemical oxygen generator may be provided by a mechanical coupling or an electrical coupling. In particular it is preferred to provide an electrical coupling via a control unit adapted to activate the first and second chemical oxygen generator. By this, it can be achieved that the first and the second chemical oxygen generator are started in a specific sequence to each other by the control unit or any other type of coupling.

According to a still further preferred embodiment, the first and the second oxygen source are coupled such that said chemical reaction of the second oxygen source is started at a time where said chemical reaction of the first oxygen source has reached a state where the output of oxygen is below a certain amount. In this embodiment, the second chemical oxygen generator is started as soon as the first chemical oxygen generator provides oxygen below a certain predetermined flow rate in particular as soon as the first chemical oxygen generator is exhausted. This is particularly useful to ensure sufficient oxygen flow to a passenger or crew member at each time of the operation of the oxygen breathing device. Still further, it can be ensured that both chemical oxygen generators are used in its full capacity, thus avoiding any waste of oxygen generated within one of the oxygen generators.

The oxygen breathing device according to the invention can be further improved by comprising a control unit, wherein said first and second oxygen source are coupled via said control unit and said control unit is adapted to initiate said chemical reaction of the second oxygen source after initiation of said chemical reaction of the first oxygen source. This preferred embodiment allows activation of the oxygen breathing device by an external signal like e.g. a signal transferred to the oxygen breathing device via a signal line. By this, the oxygen breathing device may be activated by a control system like a pressure monitoring system or by a crew member from a remote unit in case of an emergency situation. It is to be understood that the external signal provided to the oxygen breathing device may immediately activate one or two of the oxygen generators. Alternatively, the external signal may only effect a releasing action to provide oxygen masks to the passenger and after a certain other action like e.g. pulling the oxygen mask towards the passenger the control unit may activate the chemical oxygen generators to provide oxygen to the oxygen masks. Such pulling action or other action may act directly onto the control unit or onto a chemical starting unit associated with the oxygen generators.

It is particularly preferred that said control unit is adapted to initiate said chemical reaction of the second oxygen source a predetermined period of time after initiation of said chemical reaction of the first oxygen source. By this, a reliable and simplified oxygen breathing unit is provided wherein by a simple and reliable timing process the two chemical oxygen generators are started one after the other, thus providing a specific profile of oxygen flow rate over time which corresponds to a typical emergency situation and descent occurring in commercial aircraft flying at high altitudes wherein in case of an emergency situation which occurs at high altitude an initially high flow rate of oxygen must be provided to the passengers whereby the aircraft starts a quick descent manoeuvre to proceed travelling at low altitude, whereby in this low altitude only a small rate of oxygen flow per time unit must be provided to the passengers over a long period of time.

According to a still further preferred embodiment, said control unit comprises a timing device for determining said predetermined period of time. By this, a simplified and reliable device is provided for controlling the initiation of said chemical reactions within the oxygen sources.

According to a still further aspect of the invention, an oxygen breathing device as described beforehand is provided, the oxygen breathing device comprising a plurality of chemical oxygen sources each comprising at least one chemical agent, which is able to perform a chemical reaction to produce oxygen, wherein said plurality of chemical oxygen sources are coupled such that said chemical reaction of said chemical oxygen sources are initiated in series after each other. By this, the general principal of the use of two chemical oxygen generators as described beforehand is applied to more than two such oxygen generators within one oxygen breathing device. By this, the whole oxygen breathing device can be adapted to react more flexibly to numerous different situations and conditions and the weight and space required by the device can be further decreased. It is to be understood, that the chemical oxygen generators may be similar or different, as described beforehand, and may be controlled in many different ways as described before.

In such preferred embodiment, it is further preferred that a plurality of starting devices is provided, each associated with one of said chemical oxygen sources, wherein said starting devices are activated one after the other. By this, each chemical oxygen generator can be started independently from the others.

The starting devices are preferably integrated into said chemical oxygen sources, respectively, to allow lightweight and compact dimension of the device.

Alternatively, said starting devices are integrated into a control unit coupled to an external signal line for receiving an activating signal from an external source. By this, a central control unit within the oxygen breathing device is provided which is capable to control initiation of each of the oxygen generators via a starting device integrated into the control unit.

A still further aspect of the invention is a method for supplying oxygen to a person using an oxygen breathing device, the method comprising the steps of starting a first chemical reaction within a first oxygen source at a first time, providing oxygen generated in the first chemical reaction to the person via the oxygen mask, whereby the method comprises the steps of starting a second chemical reaction within a second oxygen source at a second time after said first time and providing oxygen generated in the second chemical reaction to the person via said oxygen mask.

Such method is particularly useful for supplying oxygen to passengers or crew members during an emergency descent situation in an aircraft.

The method can be improved in that a control unit transmits a first start signal to a starting device associated with the first chemical oxygen generator and the control unit transmits a second start signal to a starting device associated with the second chemical oxygen generator after a timed period has elapsed after transmittal of said first start signal. By this, a reliable method is provided for supplying oxygen to passengers or crew members.

Finally it is further preferred that a plurality of chemical reactions in a corresponding plurality of chemical oxygen generators is started one after the other. By this, a variable and long-lasting supply of oxygen can be provided to a passenger or crew member of an aircraft.

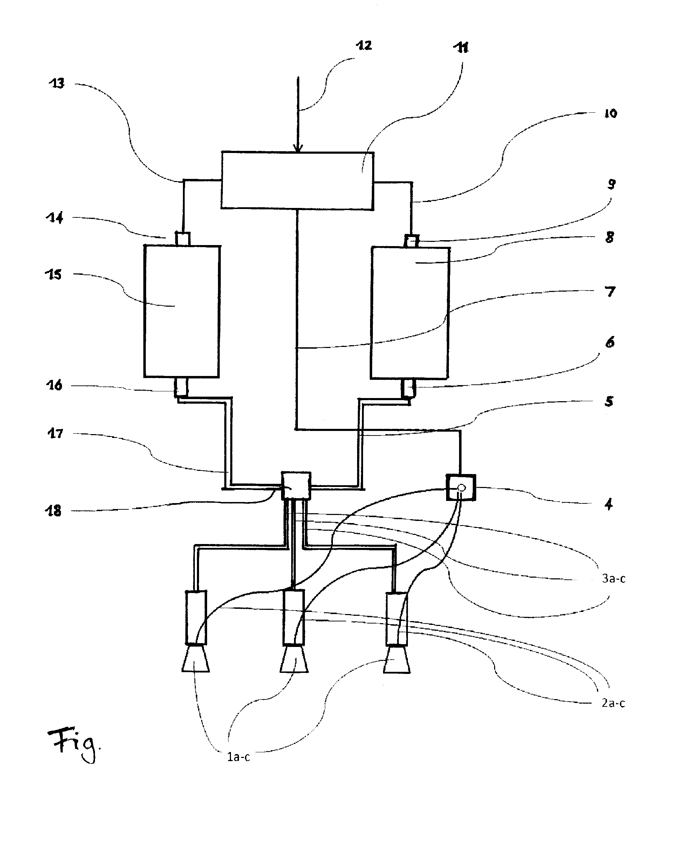

A preferred embodiment of the invention is described with reference to the accompanying figure, wherein the figure shows a schematical view of an oxygen breathing device according to the invention.

The chemical oxygen breathing device for long running times comprises two chemical oxygen generators 8, 15. It is to be understood, that more than two oxygen generators could be provided but for ease of explanation reference is made to only those two oxygen generators shown in the figure.

The chemical oxygen generators 8, 15 are arranged parallel to each other and are both coupled via oxygen tubes 5, 17 to oxygen manifold 18.

Three oxygen masks 1a-c are connected in fluid communication to said manifold 18 via oxygen flow hoses 3a-c.

Each of the oxygen masks 1a-c is coupled to a starting switch 4 via a loose starting line 2a-c. The starting lines 2a-c are in a non-loaded state when the oxygen masks are arranged within a housing comprising the whole oxygen breathing unit. As soon as a lid or the like (not shown) of the housing is opened, the oxygen masks may fall out of this housing for a distance defined by the starting lines 3a-c. If a passenger pulls one of the oxygen masks towards himself, this pulling force is transferred via the respective starting line to the starting switch 4, thus sending a main starting signal via a signal line 7 coupling the starting switch 4 with a control unit 11.

When receiving such main starting signal via the signal line 7, the control unit 11 will first activate an electrical starter 9 by sending a first starting signal via a signal line 10 connecting said electrical starter 9 with said control unit 11. The first electrical starter 9 is associated with the first chemical oxygen generator 8 and integrated into said first chemical oxygen generator 8. Upon receipt of said first starting signal via signal line 10, the electrical starter 9 initiates the chemical reaction within the oxygen generator 8, thus providing oxygen via the oxygen tube 5, manifold 18 to the oxygen masks 1a-c.

At the time the control unit 11 receives the main starting signal from starting switch 4 via starting signal line 7, an electrical timer is started within the control unit 11. It is to be understood that the timer could be of mechanical or chemical type or any other type either.

As soon as this electrical timer within the control unit has elapsed the control unit sends a second starting signal to second electrical starter 14 via signal line 13.

Said second electrical starter 14 is associated with and integrated into the second chemical oxygen generator and starts upon receipt of said second starting signal from the control unit 11 the chemical reaction within the second chemical oxygen generator 15. By this, oxygen is produced within the second chemical oxygen generator 15 and provided to the same oxygen masks 1a-c via oxygen tube 17, manifold 18 and oxygen hoses 3a-c.

As shown in the figure, an external electrical supply line 12 is coupled to the control unit to supply the control unit with electrical energy. It is to be understood that the electrical supply line 12 may further comprise signal lines to activate the control unit 11 via an external signal, e.g. to thus open a lid of the whole oxygen breathing unit and to thus allow activation of the oxygen generators via the pulling action onto starting switch 4.

Whereas the invention was described with reference to a preferred embodiment, it is to be understood that the description and the figure is to be understood as a descriptive but not limiting example. The scope of protection shall be determined by the following claims only in the light of the description and the figures.

## Claims

1. An oxygen breathing device, in particular for providing oxygen to passenger or crew member of an aircraft, the device comprising:
- a first chemical oxygen source (8) comprising at least one chemical agent, which is able to perform a chemical reaction to produce oxygen,
- **characterized by** a second chemical oxygen source (15) comprising at least one chemical agent, which is able to perform a chemical reaction to produce oxygen, wherein the first and the second oxygen source may be started independently from each other.

2. The oxygen breathing device according to claim 1, wherein the first chemical oxygen source is adapted to provide a higher rate of oxygen per time unit than the second chemical oxygen source.

3. The oxygen breathing device according to claim 1 or 2, wherein the second chemical oxygen source is adapted to provide oxygen over a longer period of time than the first chemical oxygen source.

4. The oxygen breathing device according to any of the preceding claims, further comprising a control unit (11) adapted to activate the first or the second chemical oxygen source depending on the amount of oxygen required by the passenger or crew member of the aircraft.

5. The oxygen breathing device according to any of the preceding claims,
wherein the first and the second oxygen source are coupled such that said chemical reaction of the second oxygen source is started after said chemical reaction of the first oxygen source is started.

6. The oxygen breathing device according to any of the preceding claims,
wherein the first and the second oxygen source are coupled such that said chemical reaction of the second oxygen source is started at a time where said chemical reaction of the first oxygen source has reached a state where the output of oxygen is below a certain amount.

7. The oxygen breathing device according to any of the preceding claims, comprising a control unit (11), wherein said first and second oxygen source are coupled via said control unit and said control unit is adapted to initiate said chemical reaction of the second oxygen source after initiation of said chemical reaction of the first oxygen source.

8. The oxygen breathing device according to the preceding claim, wherein said control unit is adapted to initiate said chemical reaction of the second oxygen source a predetermined period of time after initiation of said chemical reaction of the first oxygen source.

9. The oxygen breathing device according to the preceding claim, wherein said control unit (11) comprises a timing device for determining said predetermined period of time.

10. The oxygen breathing device according to any of the preceding claims, comprising a plurality of chemical oxygen sources each comprising at least one chemical agent, which is able to perform a chemical reaction to produce oxygen, wherein said plurality of chemical oxygen sources are coupled such that said chemical reaction of said chemical oxygen sources are initiated in series after each other.

11. The oxygen breathing device according to any of the preceding claims, further comprising a plurality of starting devices each associated with one of said chemical oxygen sources, wherein said starting devices are activated one after the other.

12. The oxygen breathing device according to claim 11, wherein said starting devices are integrated into said chemical oxygen sources, respectively.

13. The oxygen breathing device according to claim 11, further comprising a control unit coupled to an external signal line for receiving an activating signal from an external source wherein said starting devices are integrated into said control unit.

14. A method for supplying oxygen to a person using an oxygen breathing device, the method comprising the steps of:
- starting a first chemical reaction within a first oxygen source at a first time,
- providing oxygen generated in the first chemical reaction to the person via an oxygen mask,
**characterized by** the steps of
- starting a second chemical reaction within a second oxygen source at a second time after said first time,
- providing oxygen generated in the second chemical reaction to the person via said oxygen mask.

15. The method according to claim 14,
wherein a control unit transmits a first start signal to a starting device associated with the first chemical oxygen generator and the control unit transmits a second start signal to a starting device associated with the second chemical oxygen generator after a timed period has elapsed after said first start signal.

16. The method according to claim 14 or 15,
wherein a plurality of chemical reactions in a corresponding plurality of chemical oxygen generators is started one after the other.
